# EUROPEAN PATENT APPLICATION

(11) **EP 4 741 442 A1**
(43) Date of publication of application: **13.05.2026**
(21) Application number: 24839588.1
(22) Date of filing: 02.07.2024
(51) Int. Cl.: C08G 77/54, C08F 290/06

(54) **DOUBLE-TERMINAL (METH)ACRYLIC-MODIFIED SILICONE MACROMER HAVING TERTIARY AMINO GROUP OR QUATERNARY AMMONIUM CATION SITE IN MOLECULAR CHAIN, AND METHOD FOR PRODUCING SAME**

(30) Priority: 07.07.2023 JP 2023112191
(71) Applicant: SHIN-ETSU CHEMICAL CO., LTD., Tokyo 100-0005 (JP)
(72) Inventor: WATANABE, Takuma, Annaka-shi, Gunma 379-0224 (JP)
(74) Representative: V.O.
(86) International application number: PCT/JP2024/023928
(87) International publication number: WO 2025/013696

(57) **Abstract**

[Object]

One of the purposes of the present invention is to provide a silicone macromer having a (meth)acrylic group in a high percentage at double-terminals and having a quaternary ammonium cation site in a molecular chain.

[Solution]

The present invention provides a double-terminal (meth)acrylic-modified silicone macromer having a tertiary amino group in a molecular chain represented by the following general formula (1):

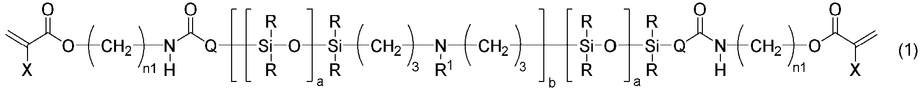

The present invention further provides a double-terminal (meth)acrylic-modified silicone macromer having a quaternary ammonium cation site in a molecular chain represented by the following general formula (4):

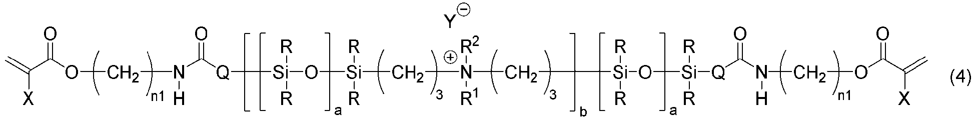

In general formulas (1) and (4), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; R² is, independently of each other, a group selected from an alkyl group having 1 to 10 carbon atoms, a 2-hydroxyethyl group, an aryl group having 6 to 10 carbon atoms, and an aralkyl group having 7 to 10 carbon atoms; X is, independently of each other, a hydrogen atom or a methyl group; Q is a divalent organic group; "a" is, independently of each other, an integer of 1 to 400; "b" is an integer of 1 to 50; "n1" is, independently of each other, an integer of 2 to 10; and Y is a chlorine atom, a bromine atom, or an iodine atom.

## Description

### TECHNICAL FIELD

The present invention relates to a double-terminal (meth)acrylic-modified silicone macromer having a tertiary amino group or a quaternary ammonium cation site in a molecular chain, and a method for producing the same.

### BACKGROUND ART

Silicone is widely used as a contact lens material due to its high oxygen permeability. However, since silicone is hydrophobic, the introduction of hydrophilic groups is being considered to make the contact lens surface hydrophilic. Among such considerations, the introduction of quaternary ammonium cation sites in silicone chains has been reported (Patent Literature 1 to 4). Among such reports, Patent Literature 1 describes a method for synthesizing a silicone macromer having a polymerizable group at double-terminals and having a quaternary ammonium cation site in a molecular chain.

### PRIOR LITERATURE

### PATENT LITERATURE

Patent Literature 1: JP National Phase Laid-Open No. 2009-542855
Patent Literature 2: JP National Phase Laid-Open No. 2009-533532
Patent Literature 3: JP National Phase Laid-Open No. 2010-516873
Patent Literature 4: JP National Phase Laid-Open No. 2009-521547

### SUMMARY OF THE INVENTION

### PROBLEM TO BE SOLVED BY THE INVENTION

However, it is inferred that in a production method according to Patent Literature 1, a certain amount of silicone without polymerizable groups is contained as an impurity. It is unfavorable for silicone that is typically used as a contact lens material to contain a large amount of compounds without polymerizable groups. It is therefore desirable to establish a method for producing a silicone macromer having a quaternary ammonium cation site in a molecular chain, in which a (meth)acrylic group is introduced in a high percentage at double-terminals.

One of the purposes of the present invention is to provide a silicone macromer having a (meth)acrylic group in a high percentage at double-terminals and having a quaternary ammonium cation site in a molecular chain.

### MEANS FOR SOLVING THE PROBLEMS

As a result of diligent research to achieve the aforementioned purpose, the inventor found that subjecting an organopolysiloxane having a hydroxy group or a secondary amino group at double-terminals and having a tertiary amino group in a molecular chain to a reaction with an isocyanate having a (meth)acrylic group, followed by quaternization into a quaternary ammonium salt to give a silicone macromer having a (meth)acrylic group in a high percentage at double-terminals and having a quaternary ammonium cation site in a molecular chain, thereby completing the present invention.

That is, the present invention provides a double-terminal (meth)acrylic-modified silicone macromer having a tertiary amino group in a molecular chain represented by the following general formula (1): 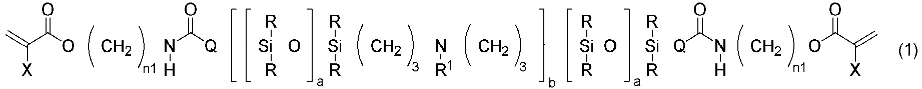 wherein, in general formula (1), R is, independently of each other, a group selected from an alkyl group having 1 to 10 carbon atoms, an aryl group having 6 to 10 carbon atoms, and an aralkyl group having 7 to 10 carbon atoms: R¹ is, independently of each other, a group selected from an alkyl group having 1 to 10 carbon atoms, an aryl group having 6 to 10 carbon atoms, and an aralkyl group having 7 to 10 carbon atoms; X is, independently of each other, a hydrogen atom or a methyl group; Q is a divalent organic group; "a" is, independently of each other, an integer of 1 to 400; "b" is an integer of 1 to 50; and "n1" is, independently of each other, an integer of 2 to 10.

Preferably, the double-terminal (meth)acrylic-modified silicone macromer further comprises the constituent feature of the following item [1].
[1] The double-terminal (meth)acrylic-modified silicone macromer having a tertiary amino group in the molecular chain, wherein Q in said general formula (1) is, independently of each other, a group represented by the following formula (2) or the following formula (3): 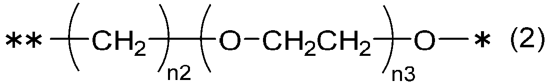 wherein, in formula (2), the site marked with ** bonds to the silicon atom, the site marked with * bonds to the carbonyl group, "n2" is an integer of 2 to 10, and "n3" is an integer of 0 to 10; 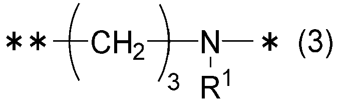 wherein, in formula (3), the site marked with ** bonds to the silicon atom, the site marked with * bonds to the carbonyl group, and R¹ is a group selected from an alkyl group having 1 to 10 carbon atoms, an aryl group having 6 to 10 carbon atoms, and an aralkyl group having 7 to 10 carbon atoms.

The present invention further provides a double-terminal (meth)acrylic-modified silicone macromer having a quaternary ammonium cation site in a molecular chain represented by the following general formula (4): 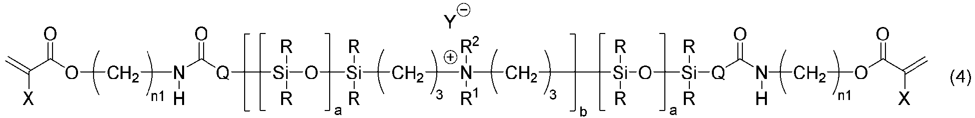 wherein, in general formula (4), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; R² is, independently of each other, a group selected from an alkyl group having 1 to 10 carbon atoms, a 2-hydroxyethyl group, an aryl group having 6 to 10 carbon atoms, and an aralkyl group having 7 to 10 carbon atoms; X is, independently of each other, a hydrogen atom or a methyl group; Q is a divalent organic group; "a" is, independently of each other, an integer of 1 to 400; "b" is an integer of 1 to 50; "n1" is, independently of each other, an integer of 2 to 10; and Y is a chlorine atom, a bromine atom, or an iodine atom.

Preferably, the double-terminal (meth)acrylic-modified silicone macromer further comprises the constituent feature of the following item [1].
[1] The double-terminal (meth)acrylic-modified silicone macromer having a quaternary ammonium cation site in the molecular chain, wherein Q in said general formula (4) is, independently of each other, a group represented by the following formula (2) or (3): 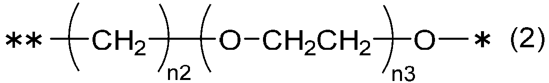 wherein, in formula (2), the site marked with ** bonds to the silicon atom, the site marked with * bonds to the carbonyl group, "n2" is an integer of 2 to 10, and "n3" is an integer of 0 to 10; 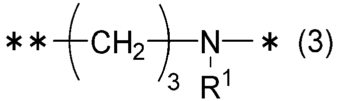 wherein, in formula (3), the site marked with ** bonds to the silicon atom, the site marked with * bonds to the carbonyl group, and R¹ is a group selected from an alkyl group having 1 to 10 carbon atoms, an aryl group having 6 to 10 carbon atoms, and an aralkyl group having 7 to 10 carbon atoms.

The present invention further provides a method for producing a double-terminal (meth)acrylic-modified silicone macromer having a tertiary amine in a molecular chain, represented by the following general formula (1): 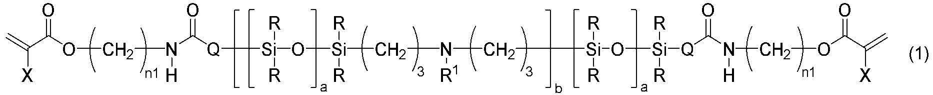
wherein, in general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; X is, independently of each other, a hydrogen atom or a methyl group; Q is a divalent organic group; "a" is, independently of each other, an integer of 1 to 400; "b" is an integer of 1 to 50; and "n1" is, independently of each other, an integer of 2 to 10,
   wherein the method comprises a step of subjecting an organopolysiloxane (A) having a tertiary amino group in a molecular chain represented by the following general formula (7) to a reaction with an isocyanate (B) having a (meth)acrylic group represented by the following general formula (10) to obtain the double-terminal (meth)acrylic-modified silicone macromer represented by said general formula (1): 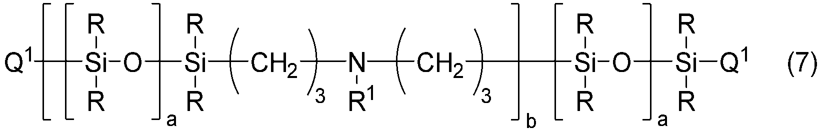
wherein, in formula (7), R, R¹, "a", and "b" are as defined above, and Q¹ is a group represented by the following formula (8) or (9): 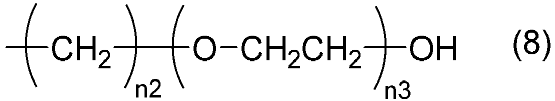
wherein, in formula (8), "n2" is an integer of 2 to 10, and "n3" is an integer of 0 to 10; 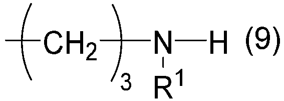
wherein, in formula (9), R¹ is as defined above; 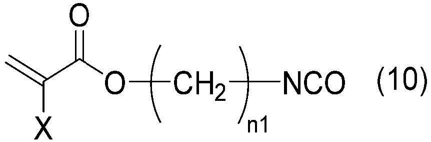
wherein, in general formula (10), X and "n1" are as defined above.

Preferably, the method for producing a double-terminal (meth)acrylic-modified silicone macromer having a tertiary amine in the molecular chain represented by said general formula (1) further comprises at least one of the constituent features of the following items [1], [2], and [3].
[1] The production method, wherein Q in said general formula (1) is, independently of each other, a group represented by the following formula (2) or the following formula (3): 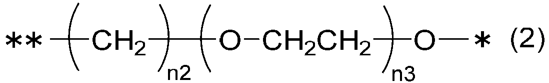 wherein, in formula (2), the site marked with ** bonds to the silicon atom, the site marked with * bonds to the carbonyl group, and "n2" and "n3" are as defined above; 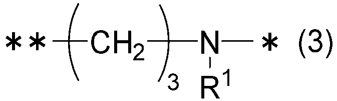 wherein, in formula (3), the site marked with ** bonds to the silicon atom, the site marked with * bonds to the carbonyl group, and R¹ is as defined above.
[2] The production method, further comprising a step of subjecting an organopolysiloxane having a hydrosilyl group at least at one terminal and having a tertiary amino group in a molecular chain to a reaction with a (poly)ethylene glycol allyl ether in the presence of a platinum catalyst to obtain the organopolysiloxane (A) having a tertiary amino group in the molecular chain represented by said general formula (7).
[3] The production method, further comprising a step of reacting a double-terminal hydrosilyl group-modified organohydrogen polysiloxane with a tertiary amine having two allyl groups in the presence of a platinum catalyst to obtain the organopolysiloxane having a hydrosilyl group at a terminal and having a tertiary amino group in the molecular chain described in the item [2].

The present invention further provides a method for producing a double-terminal (meth)acrylic-modified silicone macromer having a quaternary ammonium cation site in a molecular chain represented by the following general formula (4): 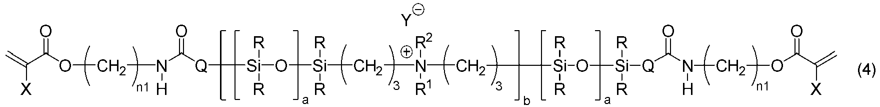
wherein, in general formula (4), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; R² is, independently of each other, a group selected from an alkyl group having 1 to 10 carbon atoms, a 2-hydroxyethyl group, an aryl group having 6 to 10 carbon atoms, and an aralkyl group having 7 to 10 carbon atoms; X is, independently of each other, a hydrogen atom or a methyl group; Q is a divalent organic group; "a" is, independently of each other, an integer of 1 to 400; "b" is an integer of 1 to 50; "n1" is, independently of each other, an integer of 2 to 10; and Y is a chlorine atom, a bromine atom, or an iodine atom,
   wherein the method comprises a step of subjecting a double-terminal (meth)acrylic-modified silicone macromer (a) having a tertiary amino group in a molecular chain represented by the following general formula (1) to a reaction with a halogenated hydrocarbon (b) represented by the following formula (14) to obtain the double-terminal (meth)acrylic-modified silicone macromer represented by said general formula (4): 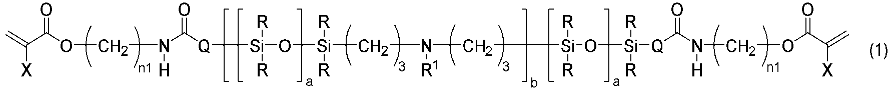
wherein, in general formula (1), R, R¹, X, Q, "a", "b", and "n1" are as defined above; 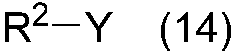
wherein, in formula (14), R² is as defined above, and Y is a chlorine atom, a bromine atom, or an iodine atom.

Preferably, the method for producing a double-terminal (meth)acrylic-modified silicone macromer having a quaternary ammonium cation site in the molecular chain represented by said general formula (4) further comprises at least one of the constituent features of the following items [1] to [5].
[1] The production method, wherein Q in said general formulas (1) and (4) is a group represented by the following formula (2) or the following formula (3): 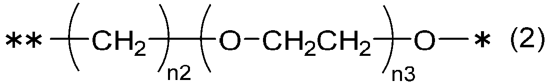 wherein, in formula (2), the site marked with ** bonds to the silicon atom, the site marked with* bonds to the carbonyl group, "n2" is, independently of each other, an integer of 2 to 10, and "n3" is, independently of each other, an integer of 0 to 10; 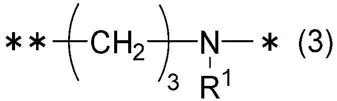 wherein, in formula (3), the site marked with ** bonds to the silicon atom, the site marked with * bonds to the carbonyl group, and R¹ is, independently of each other, a group selected from an alkyl group having 1 to 10 carbon atoms, an aryl group having 6 to 10 carbon atoms, and an aralkyl group having 7 to 10 carbon atoms.
[2] The production method, further comprising a step of subjecting an organopolysiloxane having a hydroxy group and/or a secondary amino group at a terminal and having a tertiary amino group in a molecular chain to a reaction with an isocyanate having a (meth)acrylic group to obtain the double-terminal (meth)acrylic-modified silicone macromer (a) represented by said general formula (1).
[3] The production method, wherein the organopolysiloxane having a hydroxy group and/or a secondary amino group at a terminal and having a tertiary amino group in the molecular chain described in the item [2] is represented by the following general formula (7): 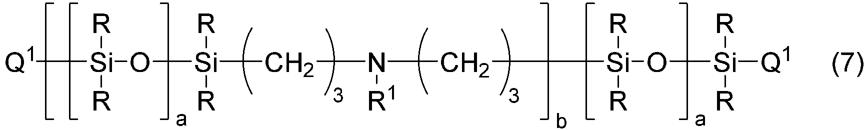 wherein, in general formula (7), R, R¹, "a", and "b" are as defined above, and Q¹ is, independently of each other, a group represented by the following formula (8) or (9): 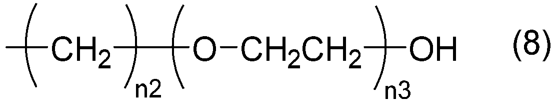 wherein, in formula (8), "n2" and "n3" are as defined above; 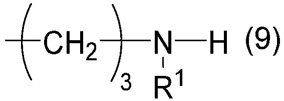 wherein, in formula (9), R¹ is as defined above.
[4] The production method, further comprising a step of subjecting an organopolysiloxane having a hydrosilyl group at least at one terminal and having a tertiary amino group in a molecular chain to a reaction with a (poly)ethylene glycol allyl ether in the presence of a platinum catalyst to obtain the organopolysiloxane having a tertiary amino group in the molecular chain represented by general formula (7) described in the item [3].
[5] The production method, further comprising a step of reacting a double-terminal hydrosilyl group-modified organohydrogen polysiloxane with a tertiary amine having two allyl groups in the presence of a platinum catalyst to obtain the organopolysiloxane having a hydrosilyl group at a terminal and having a tertiary amino group in the molecular chain described in the item [4].

The present invention further provides a copolymer of the double-terminal (meth)acrylic-modified silicone macromer having a tertiary amino group in the molecular chain and a polymerizable monomer having a group that polymerizes with the (meth)acrylic-modified silicone macromer.

The present invention further provides a copolymer of the double-terminal (meth)acrylic-modified silicone macromer having a quaternary ammonium cation site in the molecular chain and a polymerizable monomer having a group that polymerizes with the (meth)acrylic-modified silicone macromer.

The present invention further provides a silicone hydrogel comprising the copolymer.

The present invention further provides an ophthalmic lens comprising the silicone hydrogel.

In the present invention, "silicone macromer" is a high molecular-weight silicone monomer having a polymerizable group, and is a silicone monomer in which "a" and "b" of said general formulas (1) and (4) satisfy, as numbers of siloxane units, the ranges of the claimed invention.

In the present invention, "high purity" and "high percentage" mean that the amount of the silicone macromer having a polymerizable group introduced at double-terminals represented by the aforementioned formula (1) or (4) is, as a ratio, a high ratio of preferably 80% by weight or more, more preferably 90% by weight or more, more preferably 95% by weight or more, relative to the total of the silicone macromer and compounds (i.e., impurities) not having a polymerizable group. The amount of the impurities accompanying the silicone macromer represented **by** the aforementioned formula (1) or (4) is preferably as small as possible.

### EFFECTS OF THE INVENTION

The production method of the present invention introduces a high percentage of a (meth)acrylic group at double-terminals, and efficiently prepares a high-purity silicone macromer having a quaternary ammonium cation site in a molecular chain. Furthermore, a silicone hydrogel that comprises a polymer obtained from the silicone macromer of the present invention has high surface hydrophilicity.

### BRIEF DESCRIPTION OF THE DRAWINGS

[FIG. 1]

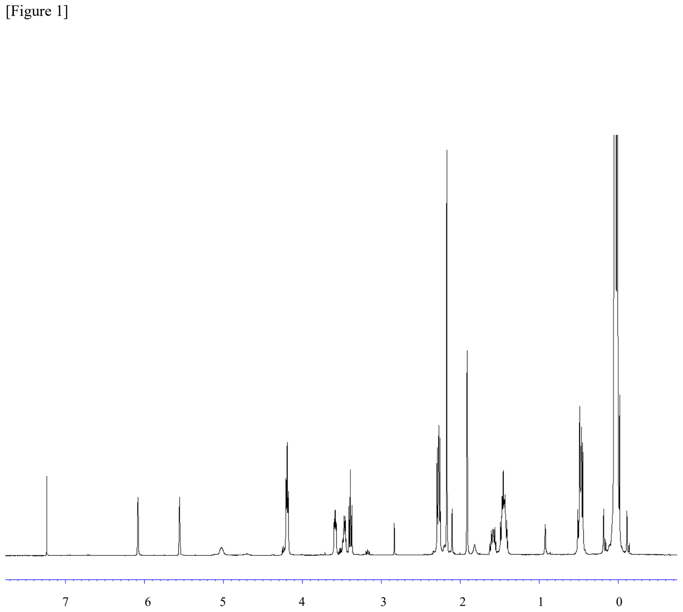

   FIG. 1 is a ¹H-NMR spectral chart of a double-terminal (meth)acrylic-modified silicone macromer having a tertiary amino group in a molecular chain synthesized in Example 1.
[FIG. 2]

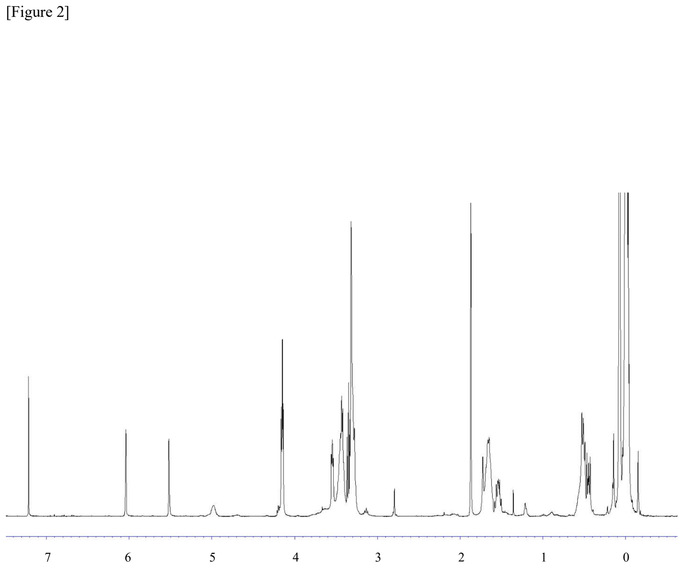

   FIG. 2 is a ¹H-NMR spectral chart of a double-terminal (meth)acrylic-modified silicone macromer having a quaternary ammonium cation site in a molecular chain synthesized in Example 2.

### MODE FOR CARRYING OUT THE INVENTION

The present invention will be explained in detail below.

### [Double-terminal (meth)acrylic-modified silicone macromer having tertiary amino group in molecular chain]

A double-terminal (meth)acrylic-modified silicone macromer having a tertiary amino group in a molecular chain of the present invention is represented by the following general formula (1).

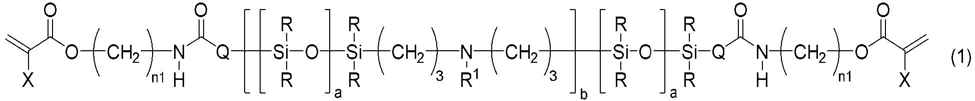

In the aforementioned general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; X is, independently of each other, a hydrogen atom or a methyl group; Q is a divalent organic group; "a" is an integer of 1 to 400; "b" is an integer of 1 to 50; and "n1" is, independently of each other, an integer of 2 to 10.

In the aforementioned general formula (1), R is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. R is preferably a methyl group and a phenyl group, more preferably a methyl group.

In the aforementioned general formula (1), R¹ is, independently of each other, a group selected from an alkyl group having 1 to 10 carbon atoms, an aryl group having 6 to 10 carbon atoms, and an aralkyl group having 7 to 10 carbon atoms. Examples of an alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. R¹ is preferably a methyl group and an ethyl group, more preferably a methyl group.

In the aforementioned general formula (1), X is, independently of each other, a hydrogen atom or a methyl group.

In the aforementioned general formula (1), "a" is, independently of each other, an integer of 1 to 400, preferably an integer of 1 to 100, more preferably an integer of 5 to 50. "b" is, independently of each other, an integer of 1 to 50, preferably an integer of 1 to 30, more preferably an integer of 1 to 10. "n1" is, independently of each other, an integer of 2 to 10, preferably an integer of 2 to 4.

In the aforementioned general formula (1), Q is a divalent organic group, preferably a group represented by the following formula (2) or the following formula (3).

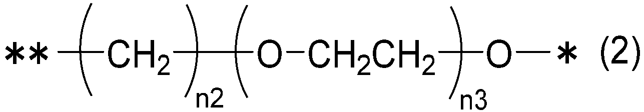

In the aforementioned formula (2), the site marked with ** bonds to the silicon atom, and the site marked with * bonds to the carbonyl group. "n2" is an integer of 2 to 10, and "n3" is an integer of 0 to 10.

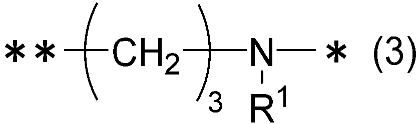

In the aforementioned formula (3), the site marked with ** bonds to the silicon atom, and the site marked with * bonds to the carbonyl group. R¹ is a group selected from an alkyl group having 1 to 10 carbon atoms, an aryl group having 6 to 10 carbon atoms, and an aralkyl group having 7 to 10 carbon atoms.

In the aforementioned formula (2), "n2" is an integer of 2 to 10, preferably an integer of 2 to 4; and "n3" is an integer of 0 to 10, preferably an integer of 1 to 6.

In the aforementioned formula (3), R¹ is a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group.

### [Both-terminal (meth)acrylic-modified silicone macromer having quaternary ammonium cation site in molecular chain]

A double-terminal (meth)acrylic-modified silicone macromer having a quaternary ammonium cation site in a molecular chain is represented by the following general formula (4).

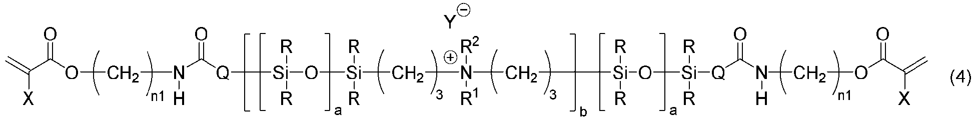

In the aforementioned general formula (4), R is, independently of each other, a group selected from an alkyl group having 1 to 10 carbon atoms, an aryl group having 6 to 10 carbon atoms, and an aralkyl group having 7 to 10 carbon atoms; R¹ is a group selected from an alkyl group having 1 to 10 carbon atoms, an aryl group having 6 to 10 carbon atoms, and an aralkyl group having 7 to 10 carbon atoms; R² is, independently of each other, a group selected from an alkyl group having 1 to 10 carbon atoms, a 2-hydroxyethyl group, an aryl group having 6 to 10 carbon atoms, and an aralkyl group having 7 to 10 carbon atoms; X is, independently of each other, a hydrogen atom or a methyl group; Q is a divalent organic group; "a" is an integer of 1 to 400; "b" is an integer of 1 to 50; "n1" is, independently of each other, an integer of 2 to 10; and Y is a chlorine atom, a bromine atom, or an iodine atom.

In the aforementioned general formula (4), R is, independently of each other, a group selected from an alkyl group having 1 to 10 carbon atoms, an aryl group having 6 to 10 carbon atoms, and an aralkyl group having 7 to 10 carbon atoms. Examples of an alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. R is preferably a methyl group and a phenyl group, more preferably a methyl group.

In the aforementioned general formula (4), R¹ is a group selected from an alkyl group having 1 to 10 carbon atoms, an aryl group having 6 to 10 carbon atoms, and an aralkyl group having 7 to 10 carbon atoms. R² is, independently of each other, a group selected from an alkyl group having 1 to 10 carbon atoms, a 2-hydroxyethyl group, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. R¹ is preferably a methyl group and an ethyl group, more preferably a methyl group. R² is preferably a methyl group and a 2-hydroxyethyl group, more preferably a methyl group.

In the aforementioned general formula (4), X is, independently of each other, a hydrogen atom or a methyl group.

In the aforementioned general formula (4), Y is a chlorine atom, a bromine atom, or an iodine atom, preferably a bromine atom or an iodine atom.

In the aforementioned general formula (4), "a" is an integer of 1 to 400, preferably an integer of 1 to 100, more preferably an integer of 5 to 50. "b" is an integer of 1 to 50, preferably an integer of 1 to 30, more preferably an integer of 1 to 10. "n1" is, independently of each other, an integer of 2 to 10, preferably an integer of 2 to 4.

In the aforementioned general formula (4), Q is a divalent organic group, preferably a group represented by the following formula (2) or the following formula (3).

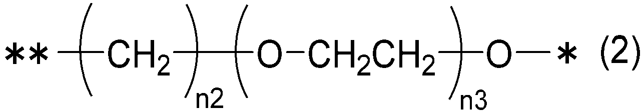

In the aforementioned formula (2), the site marked with ** bonds to the silicon atom, and the site marked with * bonds to the carbonyl group. "n2" is an integer of 2 to 10, and "n3" is an integer of 0 to 10.

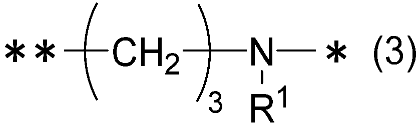

In the aforementioned formula (3), the site marked with ** bonds to the silicon atom, and the site marked with * bonds to the carbonyl group. R¹ is a group selected from an alkyl group having 1 to 10 carbon atoms, an aryl group having 6 to 10 carbon atoms, and an aralkyl group having 7 to 10 carbon atoms.

In the aforementioned formula (2), "n2" is an integer of 2 to 10, preferably an integer of 2 to 4; and "n3" is an integer of 0 to 10, preferably an integer of 1 to 6.

In the aforementioned formula (3), R¹ is a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group.

### [Method for producing double-terminal (meth)acrylic-modified silicone macromer having tertiary amino group in molecular chain]

The method for producing a double-terminal (meth)acrylic-modified silicone macromer having a tertiary amino group in the molecular chain represented by the aforementioned general formula (1) will be explained in detail below.

The production method comprises a step of subjecting an organopolysiloxane (A) having a tertiary amino group in a molecular chain represented by the following general formula (7) to a reaction with an isocyanate (B) having a (meth)acrylic group represented by the following general formula (10) to obtain a compound represented by the aforementioned general formula (1), and the aforementioned reaction is referred to hereinafter as a urethane formation reaction.

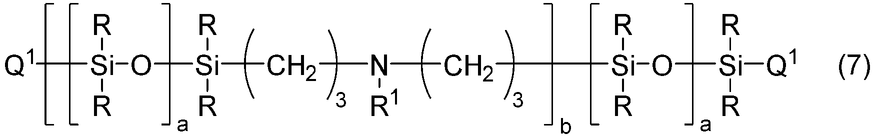

In the general formula (7), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ is a group represented by the following formula (8) or (9); "a" is an integer of 1 to 400; "b" is an integer of 1 to 50; and "n1" is, independently of each other, an integer of 2 to 10.

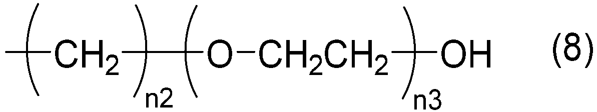

In the formula (8), "n2" is an integer of 2 to 10, and "n3" is an integer of 0 to 10.

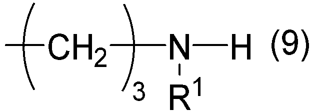

In the formula (9), R¹ is a group selected from an alkyl group having 1 to 10 carbon atoms, an aryl group having 6 to 10 carbon atoms, and an aralkyl group having 7 to 10 carbon atoms.

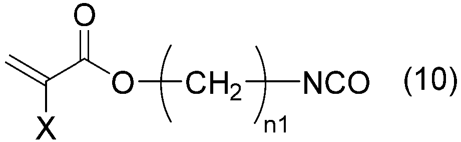

In the general formula (10), X is a hydrogen atom or a methyl group, and "n1" is an integer of 2 to 10.

In the aforementioned general formula (7), R is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. R is preferably a methyl group and a phenyl group, more preferably a methyl group.

In the aforementioned general formula (7), R¹ is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. R¹ is preferably a methyl group and an ethyl group, more preferably a methyl group.

In the aforementioned general formula (7), Q¹ is a group represented by the aforementioned formula (8) or formula (9).

In the aforementioned general formula (7), "a" is an integer of 1 to 400, preferably an integer of 1 to 100; and "b" is an integer of 1 to 50, preferably an integer of 1 to 30.

In the aforementioned formula (8), "n2" is an integer of 2 to 10, preferably an integer of 2 to 4; and "n3" is an integer of 0 to 10, preferably an integer of 1 to 6.

In the aforementioned formula (9), R¹ is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group.

In the aforementioned general formula (10), X is, independently of each other, a hydrogen atom or a methyl group.

In the aforementioned general formula (10), "n1" is an integer of 2 to 10, preferably an integer of 2 to 4.

The isocyanate represented by the aforementioned general formula (10) may be a commercial product. Examples of the isocyanate include 2-isocyanatoethyl acrylate (product name: Karenz AOI manufactured by Showa Denko K. K.) and 2-isocyanatoethyl methacrylate (product name: Karenz MOI manufactured by Showa Denko K. K.).

In the urethane formation reaction, the molar ratio of the isocyanate represented by the aforementioned general formula (10) is preferably 1 to 2 molar equivalen, more preferably 1.05 to 1.5 molar equivalents, relative to the total number of moles of hydroxy groups and secondary amino groups in the aforementioned general formula (7).

The catalyst used in the urethane formation reaction can be any known urethane-forming catalyst. Examples of the urethane-forming catalyst include tertiary amines such as triethylamine and 1,4-diazabicyclo[2.2.2]octane; and organometallic compounds such as iron(III) acetylacetonate, dibutyltin dilaurate, dioctyltin dilaurate, 2-bismuth ethylhexanoate, bismuth octanoate, tetrabutyl orthotitanate, titanium diisopropoxide bis(acetylacetonate), zirconium tetrabutoxide, and zirconium tetraacetylacetonate. Among them, iron(III) acetylacetonate is preferred.

The amount of the catalyst in the urethane formation reaction is not particularly limited. The amount of the catalyst is preferably 10 to 1,000 ppm, relative to the weight of the organopolysiloxane represented by the aforementioned general formula (7).

In the urethane formation reaction, the reaction temperature in the step of reacting an organopolysiloxane represented by the aforementioned general formula (7) with an isocyanate represented by the aforementioned general formula (10) in the presence of a urethane-forming catalyst is not particularly limited, but is preferably 40°C or more and 90°C or less, more preferably 50°C or more and 70°C or less.

In the urethane formation reaction, reaction conditions, such as the reaction time and the solvent used, are not particularly limited. The reaction time is preferably 1 to 24 hours, more preferably 1 to 12 hours, most preferably 2 to 6 hours. The solvent is preferably an aromatic hydrocarbon solvent such as toluene and xylene.

In the urethane formation reaction, a radical polymerization inhibitor is preferably added to suppress polymerization of a (meth)acrylic group at a terminal.

The radical polymerization inhibitor can be any conventionally-known radical polymerization inhibitor. Examples of the radical polymerization inhibitor include dibutylhydroxytoluene, 4-methoxyphenol, and hydroquinone. Preferably, the radical polymerization inhibitor is dibutylhydroxytoluene and 4-methoxyphenol. The radical polymerization inhibitor may be used alone or in combination with two or more thereof.

The added amount of the radical polymerization inhibitor is preferably 0.01 to 0.1 parts by mass, more preferably 0.02 to 0.08 parts by mass, relative to 100 parts by mass of the organopolysiloxane represented by the aforementioned general formula (7).

The method for producing the organopolysiloxane represented by the aforementioned general formula (7) is not particularly limited. For example, the organopolysiloxane is obtained by subjecting a double-terminal hydrosilyl group-containing organohydrogen polysiloxane to an addition reaction with a tertiary amine having two allyl groups in an excessive equivalent of hydrosilyl groups in the presence of a platinum catalyst, followed by an addition reaction carried out by adding (poly)ethylene glycol monoallyl ether to the mixture.

More specifically, the production method of the present invention further comprises a step of subjecting an organohydrogen polysiloxane having a hydrosilyl group at double-terminals to a reaction with a tertiary amine having two allyl groups in the presence of a platinum catalyst to obtain an organopolysiloxane (11) having a hydrosilyl group at least at one terminal and having a tertiary amino group in a molecular chain. An excessive equivalent of the double-terminal hydrosilyl group-containing organohydrogen polysiloxane is used, relative to the tertiary amine having two allyl groups. This molar ratio determines "b" in the aforementioned general formula (1) that is the number of repeats of the silicone chain and the tertiary amino group-containing site. The content ratio of the organopolysiloxane is preferably 1.05 to 2 molar equivalents, relative to the number of moles of tertiary amine.

The organopolysiloxane (11) preferably has following structure.

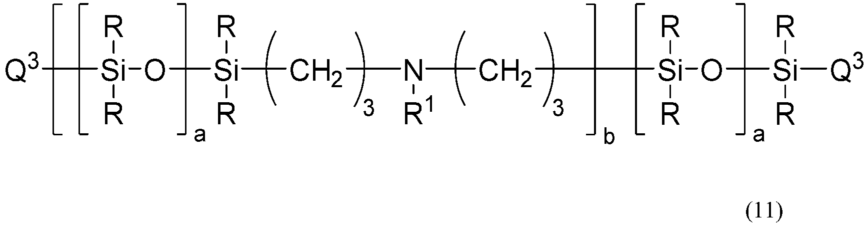

In formula (11), Q³ is, independently of each other, a hydrogen atom or a group represented by the following formula (3) or (5), wherein at least one Q³ per molecule is a hydrogen atom.

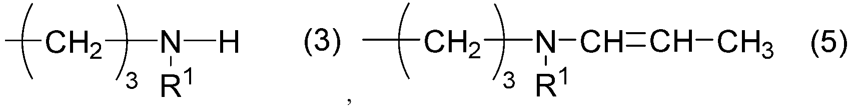

In general formula (11), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; "a" is an integer of 1 to 400; and "b" is an integer of 1 to 50. The details of R, R¹, "a", and "b" are as defined for the aforementioned general formula (1). The organopolysiloxane (11) more preferably has the following structure.

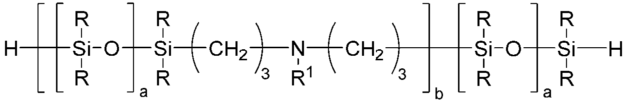

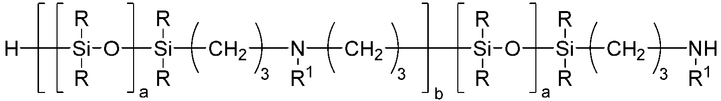

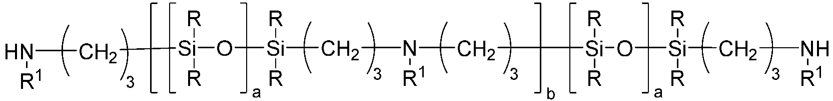

The organopolysiloxane represented by the aforementioned general formula (11) can be a mixture of one, two, or more compounds selected from the aforementioned organopolysiloxanes. More preferably, the number of hydrogen atoms bonded to a silicon atom in the organopolysiloxane is 0 to 2, preferably 1 to 2, more preferably 1.5 to 2, as the average number per molecule.

The production method of the present invention further comprises a step of reacting the organopolysiloxane (11) with a (poly)ethylene glycol allyl ether in the presence of a platinum catalyst to obtain the organopolysiloxane having a tertiary amino group in the molecular chain represented by the aforementioned general formula (7). The platinum catalyst, the reaction conditions, the solvent used, and the like, of the production method can be selected as appropriate.

In the method for producing an organopolysiloxane represented by the aforementioned general formula (7), the intermediate product (11) may be isolated at each of the steps mentioned above before proceeding to a subsequent step, or each of the steps may proceed to a subsequent step without isolating the intermediate product (11) after the reaction of each step by carrying out no processing or by carrying out only evaporation of a solvent and unreacted raw materials. Examples of a production method for obtaining the organopolysiloxane represented by the aforementioned general formula (7) without isolating the intermediate product (11) include reacting a double-terminal hydrosilyl group-containing organohydrogen polysiloxane with a tertiary amine having two allyl groups in the presence of a platinum catalyst, then confirming that the tertiary amine of the raw material no longer remains, followed by adding a (poly)ethylene glycol allyl ether and a platinum catalyst to the reaction solution and heating the reaction solution with stirring. After the completion of the reaction, the organopolysiloxane having a tertiary amino group in the molecular chain represented by the aforementioned general formula (7) can be obtained by removing the low-boiling distillate fraction and by washing.

The aforementioned (poly)ethylene glycol monoalkenyl ether is represented by the following formula.

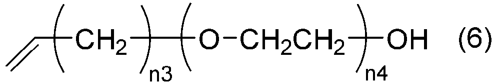

In the general formula (6), "n3" is an integer of 0 to 8, preferably an integer of 0 to 2. "n4" is an integer of 0 to 10, preferably an integer of 1 to 6. The (poly)ethylene glycol monoalkenyl ether used in the production method of the present invention may be a commercial product. Examples of the (poly)ethylene glycol monoalkenyl ether include allyl glycol, diethylene glycol monoallyl ether, polyethylene glycol allyl ether (product name: Uniox PKA-5001 (average molecular weight: 200), Uniox PKA-5002 (average molecular weight: 400), Uniox PKA-5003 (average molecular weight: 450), Uniox PKA-5004 (average molecular weight: 750), and Uniox PKA-5005 (average molecular weight: 1,500), each manufactured by NOF Corporation). The content ratio of the (poly)ethylene glycol monoalkenyl ether is preferably 1.05 to 1.4 molar equivalents, relative to the number of moles of terminal hydrosilyl groups in the organopolysiloxane.

Preferably, the organopolysiloxane represented by the aforementioned general formula (7) is represented by the following formula: 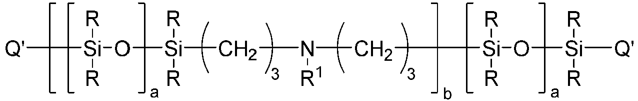 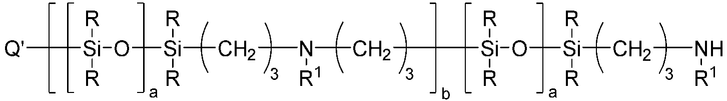 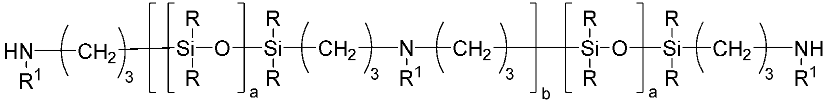 wherein Q' is a group represented by the following formula (8).

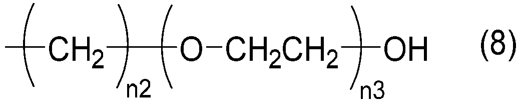

The organopolysiloxane represented by the aforementioned general formula (7) can be a mixture of one, two, or more selected from the group consisting of a compound having a group represented by the formula (8) at double-terminals, a compound having a group represented by the aforementioned formula (9) at double-terminals, and a compound having a group represented by the formula (8) at one terminal and a group represented by the aforementioned formula (9) at the other terminal. When the organopolysiloxane represented by the aforementioned general formula (7) is a mixture of compounds having different terminal structures, more preferably, the number of groups represented by the aforementioned formula (8) in the organopolysiloxane is, as the average number per molecule, 0 to 2, preferably 0.5 to 2, preferably 1 to 2, more preferably 1.5 to 2; and the number of groups represented by the aforementioned formula (9) in the organopolysiloxane is, as the average number per molecule, 0 to 2, preferably 0 to 1.5, preferably 0 to 1, more preferably 0 to 0.5.

Said general formula (7) can be used in the aforementioned reaction as a mixture of compounds having different terminal structures. The double-terminal (meth)acrylic-modified silicone macromer represented by the aforementioned general formula (1) that is obtained using the organopolysiloxane as a raw material can be a mixture of compounds having two or more different types of Q. More specifically, the mixture may contain silicone macromers, wherein the number of terminals in which Q has the structure represented by the aforementioned formula (2) is, as the average number per molecule, 0 to 2, preferably 0.5 to 2, more preferably 1 to 2, even more preferably 1.5 to 2, and silicone macromers, wherein the number of terminals in which Q has the structure represented by the aforementioned formula (3) is, as the average number per molecule, 0 to 2, preferably 0 to 1.5, more preferably 0 to 1, even more preferably 0 to 0.5.

### [Method for producing double-terminal (meth)acrylic-modified silicone macromer having quaternary ammonium cation site in molecular chain]

A method for producing a double-terminal (meth)acrylic-modified silicone macromer having a quaternary ammonium cation site in a molecular chain represented by the aforementioned general formula (4) will be explained below.

The production method comprises a step of subjecting a silicone macromer (a) having a tertiary amino group in a molecular chain represented by the aforementioned general formula (1) to a reaction with a halogenated hydrocarbon (b) represented by the following formula (14) to obtain a compound represented by the aforementioned general formula (4), and the aforementioned reaction is referred to hereinafter as a quaternary ammonium cationization reaction: 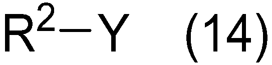 wherein, in formula (14), R² is, independently of each other, a group selected from an alkyl group having 1 to 10 carbon atoms, a 2-hydroxyethyl group, an aryl group having 6 to 10 carbon atoms, and an aralkyl group having 7 to 10 carbon atoms; and Y is a chlorine atom, a bromine atom, or an iodine atom.

In the aforementioned formula (14), R² is, independently of each other, a group selected from an alkyl group having 1 to 10 carbon atoms, a 2-hydroxyethyl group, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. R² is preferably a methyl group and a 2-hydroxyethyl group, more preferably a methyl group.

In the aforementioned formula (14), Y is a chlorine atom, a bromine atom, or an iodine atom, preferably a bromine atom or an iodine atom.

Preferred examples of the halogenated hydrocarbon represented by the aforementioned formula (14) include bromides such as bromoethane, 1-bromopropane, 1-bromobutane, 2-bromoethanol, and benzyl bromide; and iodides such as iodomethane, iodoethane, 1-iodopropane, 1-iodobutane, and 2-iodoethanol.

In the aforementioned quaternary ammonium cationization reaction, the molar ratio of the halogenated hydrocarbon represented by the aforementioned formula (14) is preferably 1 to 5 molar equivalents, more preferably 2 to 4 molar equivalents, relative to the tertiary amino group in the aforementioned general formula (1).

In the aforementioned quaternary ammonium cationization reaction, the reaction temperature is preferably 20°C or more and 120°C or less, more preferably 20°C or more and 90°C or less.

Reaction conditions of the aforementioned quaternary ammonium cationization reaction, such as the reaction time and the solvent used, are not particularly limited. The reaction time is preferably 1 to 24 hours, more preferably 3 to 12 hours. Examples of the solvent include ether solvents such as tetrahydrofuran; alcoholic solvents such as isopropanol; and aromatic hydrocarbon solvents such as toluene and xylene. Among them, tetrahydrofuran is preferred.

The method for producing the silicone macromer represented by the aforementioned general formula (1) is as described above. That is, the silicone macromer represented by the aforementioned general formula (1) is obtained by reacting an isocyanate having a (meth)acrylic group with an intermediate obtained by reacting a double-terminal hydrogen-modified organopolysiloxane with a tertiary amine having two allyl groups in an excessive equivalent of organopolysiloxane in the presence of a platinum catalyst, followed by adding a (poly)ethylene glycol allyl ether to the reaction system.

As described above, the double-terminal (meth)acrylic-modified silicone macromer represented by the aforementioned general formula (1) may be a mixture of compounds having two or more different types of Q. Therefore, the double-terminal (meth)acrylic-modified silicone macromer having a quaternary ammonium cation site in the molecular chain represented by the aforementioned general formula (4) obtained using the double-terminal (meth)acrylic-modified silicone macromer represented by the aforementioned general formula (1) as a raw material also may be a mixture of compounds having two or more different types of Q, and more specifically, may be silicone macromers, wherein the number of terminals in which Q has the structure represented by the aforementioned formula (2) is, as the average number per molecule, 0 to 2, preferably 0.5 to 2, more preferably 1 to 2, even more preferably 1.5 to 2, and silicone macromers, wherein the number of terminals in which Q has the structure represented by the aforementioned formula (3) is, as the average number per molecule, 0 to 2, preferably 0 to 1.5, more preferably 0 to 1, even more preferably 0 to 0.5.

The silicone macromer represented by the aforementioned general formula (1) or (4) of the present invention can form a copolymer by copolymerization with a polymerizable monomer having a group that polymerizes with the aforementioned silicone macromer, such as a polymerizable silicone monomer, a polymerizable hydrophilic monomer, and the like. The content ratio of the silicone macromer of the present invention is preferably 15 to 30 wt%, relative to the other polymerizable monomer in the copolymer. Two or more types of polymerizable monomers may be used in combination thereof.

Preferred examples of the polymerizable silicone monomer include (3-methacryloxy-2-hydroxypropoxy)propylbis(trimethylsiloxy)methylsilane (abbreviation: SiGMA) and methacrylic acid 3-[tris(trimethylsilyloxy)silyl]propyl (abbreviation: TRIS).

Preferred examples of the polymerizable hydrophilic monomer include acrylamide types such as acrylamide, methacrylamide, N,N-dimethylacrylamide, and *N,N-*dimethylmethacrylamide; vinylamide types such as N-methyl-N-vinylacetamide; N-vinyl cyclic amide types such as N-vinylpyrrolidone and N-vinylcaprolactam; hydroxy types such as 2-hydroxyethyl acrylate, 2-hydroxyethyl methacrylate, 4-hydroxybutyl acrylate, N-hydroxyethylacrylamide, and N-hydroxyethylmethacrylamide; amino types such as *N,N-*dimethylaminopropylacrylamide, N,N-dimethylaminopropylmethacrylamide, *N,N-*dimethylaminoethyl acrylate, and *N*,*N-*dimethylaminoethyl methacrylate; and carboxylic acid types such as acrylic acid and methacrylic acid.

The polymerization is carried out by heat or ultraviolet irradiation. These methods are well known in the relevant field. Polymerization by ultraviolet irradiation is carried out by adding a photopolymerization initiator to a side-chain urethane-modified silicone macromer and a polymerizable hydrophilic monomer, followed by irradiating with ultraviolet light. Examples of typical photopolymerization initiators include, but are not limited to, 2-hydroxy-2-methyl-1-phenylpropanone (product name: Omnirad-1173, manufactured by IGM Resins B. V.).

The present invention further provides a silicone hydrogel comprising the aforementioned copolymer. The method for producing the silicone hydrogel can follow any conventionally-known method. The silicone hydrogel obtained from the silicone macromer of the present invention has high surface hydrophilicity. The surface hydrophilicity of the silicone hydrogel is evaluated by dropping a water droplet onto the gel surface. Generally, the angle between the tangent of the water droplet and the gel surface is called the contact angle; the surface hydrophilicity increases as the contact angle decreases; and the surface hydrophilicity decreases as the contact angle increases.

According to the production method of the present invention, a polymerizable group is introduced in a high percentage at double-terminals of the silicone macromer, and the amount of compounds (impurities) not having a polymerizable group is reduced. The polymerizable group introduction rate, referred to hereinafter as the cross-linking ratio, is the cross-linking ratio determined by curing the silicone macromer by radical polymerization, followed by washing away the uncured component with an organic solvent and drying the organic solvent, and then calculating the uncured product content ratio as the cross-linking ratio from the ratio of the weight of the cured product after washing relative to the weight of the cured product before washing. That is, the percentage of impurities not having a polymerizable group is evaluated. According to the production method of the present invention, there is provided a polymerizable silicone macromer having high purity and a reduced amount of impurities not contributing to polymerizable group introduction.

The silicone hydrogel obtained from the silicone macromer of the present invention has excellent surface transparency. The silicone hydrogel is therefore preferred for producing, for example, ophthalmic devices, contact lenses, intraocular lenses, artificial corneas, and other medical materials.

### EXAMPLES

The present invention will be explained in more detail with reference to the following Examples and Comparative Examples, but the present invention is not limited to the following Examples.

¹H-NMR measurements in the following Examples and Comparative Examples were carried out using Ultrashield 400 Plus (manufactured by Bruker).

### [Synthetic Example 1]

In a three-necked flask equipped with a thermometer, a stirring device, and a reflux condenser, was placed 50.0 g of a double-terminal hydrosilyl group-containing organohydrogen polysiloxane represented by the following formula, 0.2 g of a solution of a sodium bicarbonate-neutralized chloroplatinic acid-vinylsiloxane complex in toluene (platinum content of 0.5 wt%), and 17 g of toluene, and heated to 70°C. 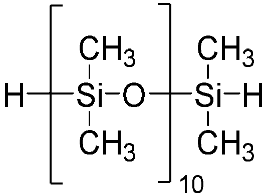 To the reaction mixture, 5.3 g of diallylmethylamine was added dropwise over 30 minutes, followed by heating at 75°C for 2 hours with stirring. After the completion of the reaction, the low-boiling distillate fraction was removed at a reduced pressure of 0.2 kPa at 100°C for 1 hour. Then 25 g of acetonitrile and 6.3 g of water wes added, and the reaction mixture was stirred, washed, and then left to stand, followed by fractionation of the silicone layer. The operation of phase separation and washing was repeated three times. The low-boiling distillate fraction was removed at a reduced pressure of 0.3 kPa at 85°C for 1.5 hours to obtain 24 g of an organopolysiloxane represented by the following formula (a'): 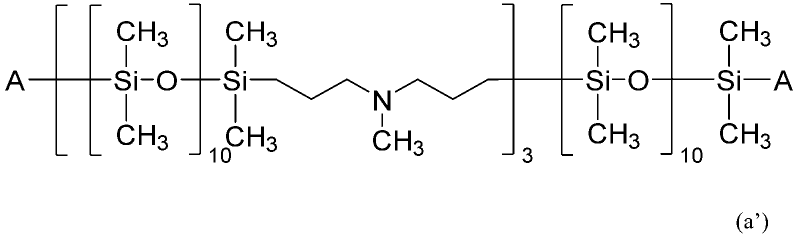 wherein, in formula (a'), A is, independently of each other, a hydrogen atom bonded to a silicon atom or a group represented by the following formula bonded to a silicon atom. The organopolysiloxane was a mixture of compounds having two or more different types of A, wherein the number of hydrogen atoms bonded to a silicon atom was 1.8 as the average number per molecule, and the number of groups represented by the following formula was 0.2 as the average number per molecule.

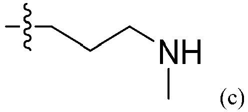

### [Synthetic Example 2]

In a three-necked flask equipped with a thermometer, a stirring device, and a reflux condenser, was placed 250.0 g of an organopolysiloxane represented by formula (a') obtained in Synthetic Example 1, 1.0 g of a solution of a sodium bicarbonate-neutralized chloroplatinic acid-vinylsiloxane complex in toluene (platinum content of 0.5 wt%), and 83 g of toluene, and heated to 70°C. To the reaction mixture, 24.3 g of allyl glycol and 0.5 g of a solution of sodium bicarbonate-neutralized chloroplatinic acid-vinylsiloxane complex in toluene (platinum content of 0.5 wt%) were added, followed by heating at 75°C for 1.5 hours with stirring. After the completion of the reaction, the low-boiling distillate fraction was removed at a reduced pressure of 0.3 kPa at 90°C for 1 hour. Then 125 g of acetonitrile and 31 g of water were added, and the reaction mixture was stirred, washed, and then left to stand, followed by fractionation of the silicone layer. The operation of phase separation and washing was repeated three times. The low-boiling distillate fraction was removed at a reduced pressure of 0.9 kPa at 100°C for 1.5 hours to obtain 247 g of an organopolysiloxane represented by the following formula (a). 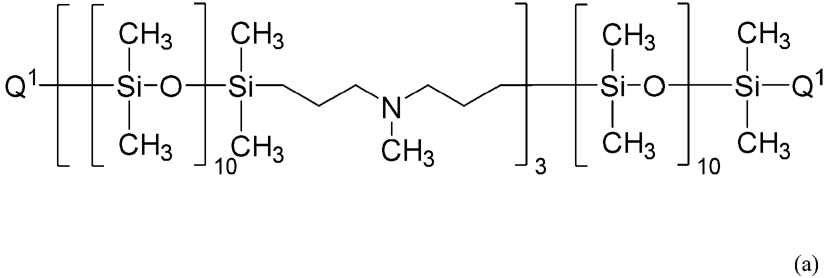 In the aforementioned formula (a), Q¹ is, independently of each other, a group represented by the following formula (b) or the following formula (c). The organopolysiloxane was a mixture of compounds having two or more different types of Q¹, wherein the number of groups represented by the following formula (b) was 1.8 as the average number per molecule, and the number of groups represented by the following formula (c) was 0.2 as the average number per molecule.

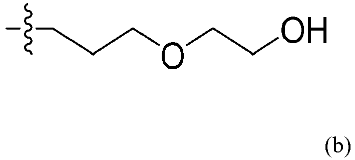

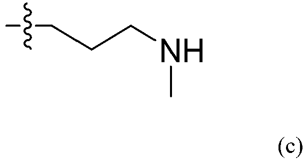

### [Example 1]

### Method for producing double-terminal (meth)acrylic-modified silicone macromer having tertiary amino group in molecular chain represented by the aforementioned general formula (1)

In a three-necked flask equipped with a thermometer, a stirring device, and a reflux condenser, was placed 80.0 g of an organopolysiloxane represented by the aforementioned formula (a), 9.5 g of 2-isocyanatoethyl methacrylate (product name: Karenz MOI, manufactured by Showa Denko K. K.), 0.0024 g of iron(III) acetylacetonate, 0.024 g of dibutylhydroxytoluene, 0.024 g of 4-methoxyphenol, and 60 g of toluene, and heated at 65°C for 1 hour with stirring. To the reaction mixture, 5.9 g of methanol was added, followed by heating at 65°C for 30 minutes with stirring. After the completion of the reaction, 2.4 g of Kyowaad 2000 (manufactured by Kyowa Chemical Industry Co., Ltd.) was added to the reaction mixture, followed by stirring at room temperature (25°C) for 1 hour. Solids were removed by filtration under pressure. The low-boiling distillate fraction was removed at a reduced pressure of 0.3 kPa at 90°C for 1 hour. Then 80 g of acetonitrile was added to the reaction mixture, and the reaction mixture was stirred and then left to stand, followed by fractionation of the silicone layer. The operation of phase separation and washing was repeated three times. The low-boiling distillate fraction was removed at a reduced pressure of 0.3 kPa at 80°C for 2.5 hours to obtain 58 g of an organopolysiloxane (silicone macromer) represented by the following formula (d). 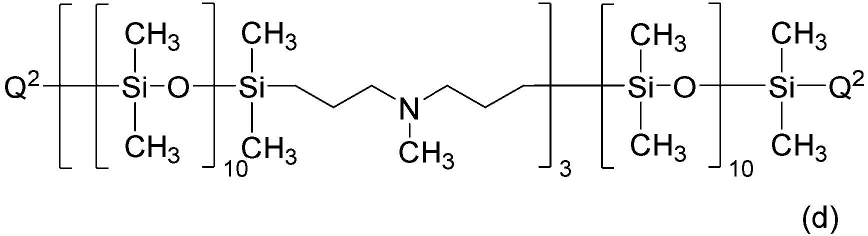 In the aforementioned formula (d), Q² is, independently of each other, a group represented by the following formula (e) or the following formula (f). The organopolysiloxane was a mixture of compounds having two or more different types of Q², wherein the number of groups represented by the following formula (e) was 1.8 as the average number per molecule, and the number of groups represented by the following formula (f) was 0.2 as the average number per molecule.

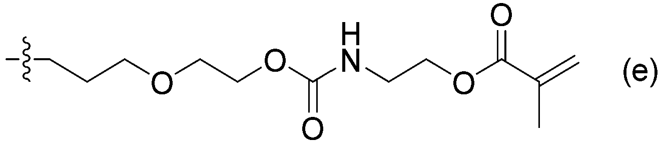

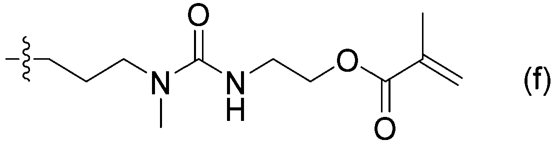

The following is the ¹H-NMR spectrum of the silicone macromer obtained in Example 1.

¹H-NMR (400MHz, CDCl₃):δ -0.17-0.22 (m, 264H), 0.38-0.55 (m, 16H), 1.37-1.65 (m, 16H), 1.92 (s, 6H), 2.05-2.36 (m, 21.4H), 2.84 (s, 0.6H), 3.18 (t, J=7.7Hz, 0.4H), 3.40 (t, J=7.1Hz, 3.6H), 3.47 (q, J=5.5Hz, 3.6H), 3.50-3.55 (m, 0.4H), 3.59 (t, J=4.6Hz, 3.6H), 4.12-4.28 (m, 7.6H), 4.70 (s, 0.2H), 5.02 (s, 1.8H), 5.56 (s, 2H), 6.08 (s, 2H)

### [Example 2]

### Both-terminal (meth)acrylic-modified silicone macromer having quaternary ammonium cation site in molecular chain represented by the aforementioned general formula (4)

In a flask equipped with a stirring device, was placed 25.0 g of a silicone macromer represented by the aforementioned formula (d), 7.5 g of iodomethane, and 25.0 g of tetrahydrofuran, and stirred at 20°C for 8 hours. After the completion of the reaction, the low-boiling distillate fraction was removed at a reduced pressure of 0.3 kPa at 60°C for 3 hours to obtain 26 g of a silicone macromer represented by the following formula (g). 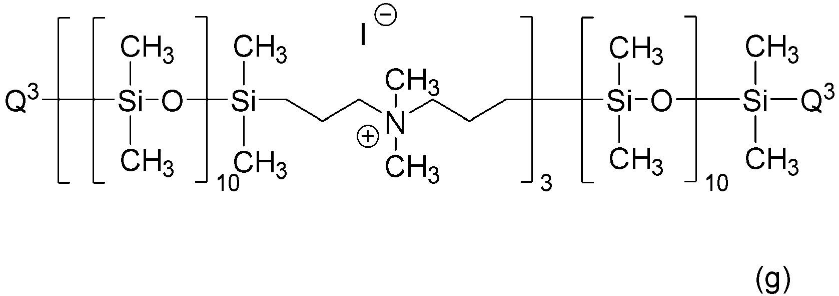 In the aforementioned formula (g), Q³ is, independently of each other, a group represented by the aforementioned formula (e) or the aforementioned formula (f). The organopolysiloxane was a mixture of compounds having two or more different types of Q³, wherein the number of groups represented by the aforementioned formula (e) was 1.8 as the average number per molecule, and the number of groups represented by the aforementioned formula (f) was 0.2 as the average number per molecule.

The following is the ¹H-NMR spectrum of the silicone macromer obtained in Example 2.

¹H-NMR (400MHz, CDCl₃):δ -0.19-0.25 (m, 264H), 0.36-0.63 (m, 16H), 1.48-1.79 (m, 16H), 1.87 (s, 6H), 2.80 (s, 0.6H), 3.13 (t, J=8.2 Hz, 0.4H), 3.21-3.77 (m, 41.2H), 4.08-4.23 (m, 7.6H), 4.70 (s, 0.2H), 4.98 (s, 1.8H), 5.52 (s, 2H), 6.04(s, 2H)

### [Preparation of silicone hydrogel]

### [Example 3]

### Preparation of silicone hydrogel of silicone macromer represented by the aforementioned formula (g)

Mixed in amounts having a mass ratio of (a):(b):(c):(d) = 25:35:40:20 were (a) a silicone macromer represented by the aforementioned formula (g), (b) (3-methacryloxy-2-hydroxypropoxy)propylbis(trimethylsiloxy)methylsilane, (c) N,N-dimethylacrylamide, and (d) isopropanol. Furthermore, 0.02 g of 2-hydroxy-2-methyl-1-phenylpropanone (product name: Omnirad-1173, manufactured by IGM Resins B. V.) was mixed into the reaction mixture, and the reaction mixture was stirred until becoming a uniform solution. The reaction mixture was left to stand and then degassed, followed by enclosing in a mold. The reaction mixture was irradiated with UV (wavelength of 365 nm, irradiation amount of 95,000 mJ/cm²) using a metal halide lamp and then cured at room temperature (20°C). The cured product thus prepared was washed with isopropanol and then allowed to swell in water. The silicone hydrogel thus obtained was a transparent yellow solid.

### [Comparative Example 1]

A silicone hydrogel was prepared as in Example 3, except that a double-terminal methacryl group-containing side-chain glycerin-modified silicone macromer (Mw = 7,843, manufactured by Shin-Etsu Chemical Co., Ltd.) was used instead of the silicone macromer represented by the aforementioned formula (g).

### [Comparative Example 2]

A silicone hydrogel was prepared as in Example 3, except that a double-terminal methacryl group-containing side-chain polyether-modified silicone macromer (Mw = 9,450, manufactured by Shin-Etsu Chemical Co., Ltd.) was used instead of the silicone macromer represented by the aforementioned formula (g).

### [Cross-linking ratio determination of cured product]

Mixed in amounts having a mass ratio of (a):(b) = 5:1 were (a) a silicone macromer represented by formula (g) obtained in Example 2 and (b) isopropanol. The mixture was cured by repeating the procedure of Example 3 to thereby obtain a cured product. The uncured component in the cured product thus prepared was washed with isopropanol, followed by airdrying for 1 hour, and then heated drying at 150°C for 2 hours. The mass of the cured product after washing was 95%, relative to the mass of the cured product before washing. That is, the content ratio of compounds not contributing to the introduction of polymerizable groups accompanying the silicone macromer obtained in the aforementioned Example was 5%, and the cross-linking ratio, i.e., the content ratio of compounds introducing a polymerizable group relative to the total mass of the product, was 95%. Accordingly, the production method of the present invention introduced a (meth)acrylic group to the terminal of the silicone macromer in a high percentage of 95% or more.

### [Surface hydrophilicity test of silicone hydrogels]

A surface hydrophilicity test of the silicone hydrogels prepared in Example 3 and Comparative Examples 1 and 2 was carried out. A 3.0 µL water droplet was dropped by a microsyringe from above the silicone hydrogel fixed horizontally, and the contact angle between the water droplet and the gel surface was measured. These operations were carried out automatically using a fully automatic contact angle meter DMo-701 (manufactured by Kyowa Interface Science Co., Ltd.). The results are shown in Table 1.

**[Table 1]**

| | Example 3 | Comparative Example 1 | Comparative Example 2 |
|---|---|---|---|
| Contact angle , ° | 113 | 119 | 123 |

As shown in Table 1, the silicone hydrogel obtained from the copolymer of the double-terminal (meth)acrylic-modified silicone macromer having the quaternary ammonium cation site of the present invention had a smaller surface water contact angle than the silicone hydrogels obtained in Comparative Examples 1 and 2. That is, the silicone hydrogel having a structure derived from the double-terminal (meth)acrylic-modified silicone macromer having the quaternary ammonium cation site of the present invention had high surface hydrophilicity.

### INDUSTRIAL APPLICABILITY

A copolymer containing the terminal (meth)acrylic-modified silicone macromer of the present invention has excellent hydrophilicity. A silicone hydrogel containing the copolymer has excellent transparency. Therefore, the terminal (meth)acrylic-modified silicone macromer of the present invention is preferred for producing, for example, ophthalmic devices, contact lenses, intraocular lenses, artificial corneas, and other medical materials.

## Claims

1. A double-terminal (meth)acrylic-modified silicone macromer having a tertiary amino group in a molecular chain, represented by the following general formula (1): 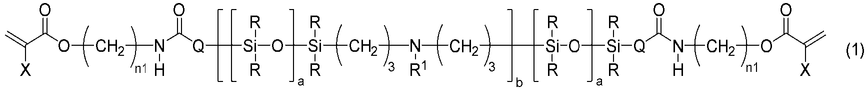 wherein, in general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; X is, independently of each other, a hydrogen atom or a methyl group; Q is a divalent organic group; "a" is, independently of each other, an integer of 1 to 400; "b" is an integer of 1 to 50; and "n1" is, independently of each other, an integer of 2 to 10.

2. The double-terminal (meth)acrylic-modified silicone macromer having a tertiary amino group in the molecular chain according to claim 1, wherein Q in said general formula (1) is, independently of each other, a group represented by the following formula (2) or the following formula (3): 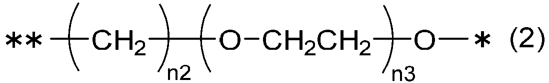 wherein, in formula (2), the site marked with ** bonds to the silicon atom, the site marked with * bonds to the carbonyl group, "n2" is an integer of 2 to 10, and "n3" is an integer of 0 to 10; 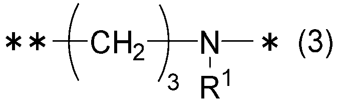 wherein, in formula (3), the site marked with ** bonds to the silicon atom, the site marked with * bonds to the carbonyl group, and R¹ is a group selected from an alkyl group having 1 to 10 carbon atoms, an aryl group having 6 to 10 carbon atoms, and an aralkyl group having 7 to 10 carbon atoms.

3. A double-terminal (meth)acrylic-modified silicone macromer having a quaternary ammonium cation site in a molecular chain, represented by the following general formula (4): 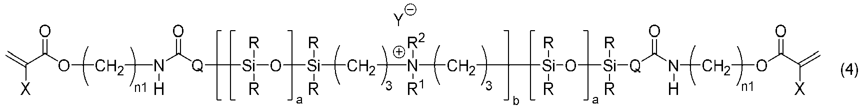 wherein, in general formula (4), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; R² is, independently of each other, a group selected from an alkyl group having 1 to 10 carbon atoms, a 2-hydroxyethyl group, an aryl group having 6 to 10 carbon atoms, and an aralkyl group having 7 to 10 carbon atoms; X is, independently of each other, a hydrogen atom or a methyl group; Q is a divalent organic group; "a" is, independently of each other, an integer of 1 to 400; "b" is an integer of 1 to 50; "n1" is, independently of each other, an integer of 2 to 10; and Y is a chlorine atom, a bromine atom, or an iodine atom.

4. The double-terminal (meth)acrylic-modified silicone macromer having a quaternary ammonium cation site in the molecular chain according to claim 3, wherein Q in said general formula (4) is, independently of each other, a group represented by the following formula (2) or (3): 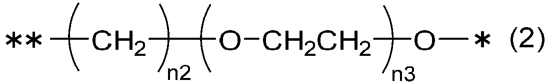 wherein, in formula (2), the site marked with ** bonds to the silicon atom, the site marked with * bonds to the carbonyl group, "n2" is an integer of 2 to 10, and "n3" is an integer of 0 to 10; 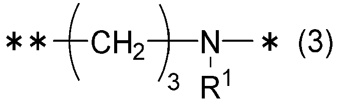 wherein, in formula (3), the site marked with ** bonds to the silicon atom, the site marked with * bonds to the carbonyl group, and R¹ is a group selected from an alkyl group having 1 to 10 carbon atoms, an aryl group having 6 to 10 carbon atoms, and an aralkyl group having 7 to 10 carbon atoms.

5. A method for producing a double-terminal (meth)acrylic-modified silicone macromer having a tertiary amine in a molecular chain, represented by the following general formula (1): 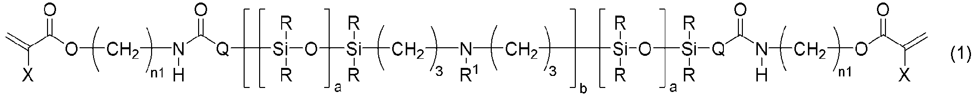
wherein, in general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; X is, independently of each other, a hydrogen atom or a methyl group; Q is a divalent organic group; "a" is, independently of each other, an integer of 1 to 400; "b" is an integer of 1 to 50; and "n1" is, independently of each other, an integer of 2 to 10,
wherein the method comprises a step of subjecting an organopolysiloxane (A) having a tertiary amino group in a molecular chain represented by the following general formula (7) to a reaction with an isocyanate (B) having a (meth)acrylic group represented by the following general formula (10) to obtain the double-terminal (meth)acrylic-modified silicone macromer represented by said general formula (1): 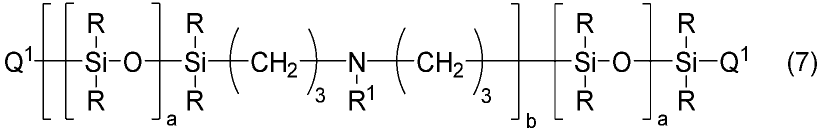
wherein, in formula (7), R, R¹, a, and b are as defined above, and Q¹ is a group represented by the following formula (8) or (9): 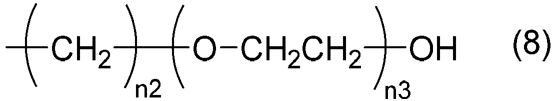
wherein, in formula (8), "n2" is an integer of 2 to 10, and "n3" is an integer of 0 to 10; 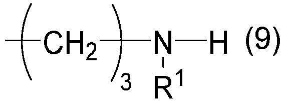
wherein, in formula (9), R¹ is as defined above; 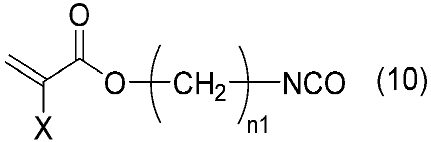
wherein, in general formula (10), X and "n1" are as defined above.

6. The method for producing the double-terminal (meth)acrylic-modified silicone macromer having a tertiary amine in the molecular chain according to claim 5, wherein Q in said general formula (1) is, independently of each other, a group represented by the following formula (2) or the following formula (3): 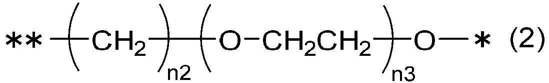
wherein, in formula (2), the site marked with ** bonds to the silicon atom, the site marked with * bonds to the carbonyl group, and "n2" and "n3" are as defined above; 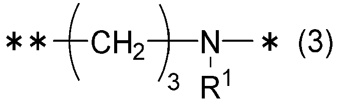
wherein, in formula (3), the site marked with ** bonds to the silicon atom, the site marked with * bonds to the carbonyl group, and R¹ is as defined above.

7. The method for producing the double-terminal (meth)acrylic-modified silicone macromer having a tertiary amine in the molecular chain according to claim 5, further comprising a step of subjecting an organopolysiloxane having a hydrosilyl group at least at one terminal and having a tertiary amino group in a molecular chain to a reaction with a (poly)ethylene glycol allyl ether in the presence of a platinum catalyst to obtain the organopolysiloxane (A) having a tertiary amino group in the molecular chain represented by said general formula (7).

8. The method for producing the double-terminal (meth)acrylic-modified silicone macromer having a tertiary amine in the molecular chain according to claim 7, further comprising a step of reacting a double-terminal hydrosilyl group-modified organohydrogen polysiloxane with a tertiary amine having two allyl groups in the presence of a platinum catalyst to obtain the organopolysiloxane having a hydrosilyl group at a terminal and having a tertiary amino group in the molecular chain.

9. A method for producing a double-terminal (meth)acrylic-modified silicone macromer having a quaternary ammonium cation site in a molecular chain, represented by the following general formula (4): 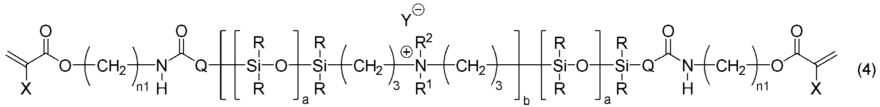
wherein, in general formula (4), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; R² is, independently of each other, a group selected from an alkyl group having 1 to 10 carbon atoms, a 2-hydroxyethyl group, an aryl group having 6 to 10 carbon atoms, and an aralkyl group having 7 to 10 carbon atoms; X is, independently of each other, a hydrogen atom or a methyl group; Q is a divalent organic group; "a" is, independently of each other, an integer of 1 to 400; "b" is an integer of 1 to 50; "n1" is, independently of each other, an integer of 2 to 10; and Y is a chlorine atom, a bromine atom, or an iodine atom,
wherein the method comprises a step of subjecting a double-terminal (meth)acrylic-modified silicone macromer (a) having a tertiary amino group in a molecular chain represented by the following general formula (1) to a reaction with a halogenated hydrocarbon (b) represented by the following formula (14) to obtain the double-terminal (meth)acrylic-modified silicone macromer represented by said general formula (4): 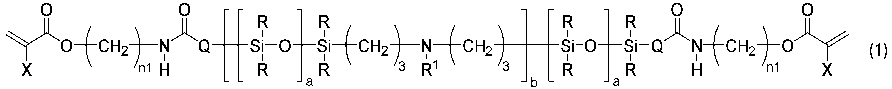
wherein, in general formula (1), R, R¹, X, Q, "a", "b", and "n1" are as defined above; 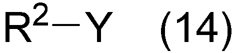
wherein, in formula (14), R² is as defined above, and Y is a chlorine atom, a bromine atom, or an iodine atom.

10. The method for producing the double-terminal (meth)acrylic-modified silicone macromer having a quaternary ammonium cation site in the molecular chain according to claim 9,
wherein Q in said general formulas (1) and (4) is a group represented by the following formula (2) or the following formula (3): 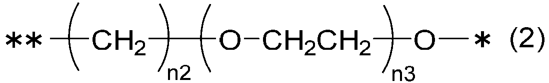
wherein, in formula (2), the site marked with ** bonds to the silicon atom, the site marked with * bonds to the carbonyl group, "n2" is, independently of each other, an integer of 2 to 10, and "n3" is, independently of each other, an integer of 0 to 10; 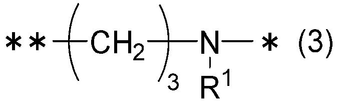
wherein, in formula (3), the site marked with ** bonds to the silicon atom, the site marked with * bonds to the carbonyl group, and R¹ is, independently of each other, a group selected from an alkyl group having 1 to 10 carbon atoms, an aryl group having 6 to 10 carbon atoms, and an aralkyl group having 7 to 10 carbon atoms.

11. The method for producing the double-terminal (meth)acrylic-modified silicone macromer according to claim 10, further comprising a step of subjecting an organopolysiloxane having a hydroxy group or a secondary amino group at a terminal and having a tertiary amino group in a molecular chain to a reaction with an isocyanate having a (meth)acrylic group to obtain the double-terminal (meth)acrylic-modified silicone macromer (a) represented by said general formula (1).

12. The method for producing the double-terminal (meth)acrylic-modified silicone macromer having a quaternary ammonium cation site in the molecular chain according to claim 11, wherein the organopolysiloxane having a hydroxy group or a secondary amino group at a terminal and having a tertiary amino group in the molecular chain is represented by the following general formula (7): 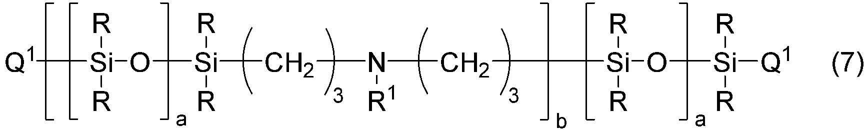
wherein, in general formula (7), R, R¹, "a", and "b" are as defined above, and Q¹ is, independently of each other, a group represented by the following formula (8) or (9): 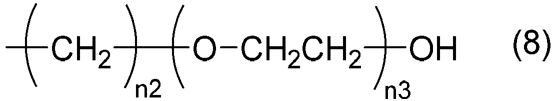
wherein, in formula (8), "n2" and "n3" are as defined above; 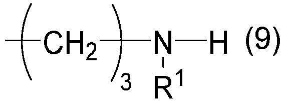
wherein, in formula (9), R¹ is as defined above.

13. The method for producing the double-terminal (meth)acrylic-modified silicone macromer having a quaternary ammonium cation site in the molecular chain according to claim 12, further comprising a step of subjecting an organopolysiloxane having a hydrosilyl group at least at one terminal and having a tertiary amino group in a molecular chain to a reaction with a (poly)ethylene glycol allyl ether in the presence of a platinum catalyst to obtain the organopolysiloxane having a tertiary amino group in the molecular chain represented by general formula (7).

14. The method for producing the double-terminal (meth)acrylic-modified silicone macromer having a quaternary ammonium cation site in the molecular chain according to claim 13, further comprising a step of reacting a double-terminal hydrosilyl group-modified organohydrogen polysiloxane with a tertiary amine having two allyl groups in the presence of a platinum catalyst to obtain the organopolysiloxane having a hydrosilyl group at a terminal and having a tertiary amino group in the molecular chain.

15. A copolymer of the double-terminal (meth)acrylic-modified silicone macromer having a tertiary amino group in the molecular chain according to claim 1 and a polymerizable monomer having a group that polymerizes with the (meth)acrylic-modified silicone macromer.

16. A copolymer of the double-terminal (meth)acrylic-modified silicone macromer having a quaternary ammonium cation site in the molecular chain according to claim 3 and a polymerizable monomer having a group that polymerizes with the (meth)acrylic-modified silicone macromer.

17. A silicone hydrogel comprising the copolymer according to claim 15 or 16.

18. An ophthalmic lens comprising the silicone hydrogel according to claim 17.
